# EUROPEAN PATENT APPLICATION

(11) **EP 1 418 505 A2**
(43) Date of publication of application: **12.05.2004**
(21) Application number: 03103598.3
(22) Date of filing: 29.09.2003
(51) Int. Cl.: G06F 13/36

(54) **Task manager - method of forwarding messages among task blocks**

(30) Priority: 01.10.2002 US 262308
(71) Applicant: Zarlink Semiconductor V.N. Inc., Irvine, CA 92612 (US)
(72) Inventor: Ta, John, Laguna Niguel, CA 92677 (US); Chang, Rong-Feng, Irvine, CA 92620 (US)
(74) Representative: Harding, Richard Patrick

(57) **Abstract**

A method of forwarding messages among task blocks using a task manager is disclosed. The task manager receives the message at an input port, and the method comprises determining the destination of the mess age. The message is stored in a pre -allocated segment that is selected from a plurality of segments within an input buffer. Each pre -allocated segment is associated with an output buffer. The method further comprises moving the message to the output buffer associated with the pre -allocated segment by an arbitrator that uses a round robin scheme for polling each input port. The pre -allocated segment is selected based on the destination of the message. The message may further comprise a priority, wherein the message is routed to a switch plane based on the message control signals. The higher priority switch plane is given priority whenever there is a resource conflict.

## Description

This invention is generally related to a chip based architecture that includes a task based methodology and more specifically to a process of forwarding proprietary messages among task blocks via a task manager's input ports and output ports.

Convergence is the coming together of basic telephony, telecommunications, the Internet, and private networks, with enormous potential for the introduction of new services and technologies. For chip manufacturers, the chief implication of the growing emphasis on convergence is that future products will need to be able to transport information not from just one interface to another, but from any interface to any other interface, convert from any information format to another, and provide new services and technologies as they are introduced. This converging communications model will require chip manufacturers to accommodate not one or two types of traffic, as in classical devices, but traffic in many directions, in many formats, and with many services required.

It is well-known that the capability of reusing intellectual property greatly reduces the total work of an organization as well as the time -to-market. In a conventional hardware design, each functional block performs its operations, and then passes the result to the next block in the data path. Under this "old school" design methodology, as long as the basic data flow remains the same, new functions can sometimes be added to existing blocks wit hout disturbing surrounding blocks. This is the basis for traditional intellectual property reuse.

However, in this new evolving and complicated convergence environment, traditional intellectual property reuse no longer works, because the addition of anew traffic direction, format, or service means disrupting the majority of existing blocks in a chip. Indeed, the whole point of convergence is that everything is interconnected with everything else. But this creates a problem for non-disruptive intellectual property reuse.

What is needed is a next -generation concept for chip design that allows for the addition of entirely new data flows with as little change to the underlying platform as possible. What is also needed is a method for the chip design to h andle communications with the various processes interfacing with the chip.

Additional objects, advantages and novel features of the invention will be set forth in part in the description which follows, and in part will become apparent to those skilled in the art upon examination of the following or may be learned by practice of the invention. The objects and advantages of the invention may be realized and attained by means of instrumentalities and combinations particularly pointed out in the appended cla ims.

In view of the aforementioned needs, one aspect of the invention contemplates a method of forwarding messages among task blocks using a task manager. The task manager receiving the message at an input port. The method further comprises determining the destination of the message. The message is stored in a pre -allocated segment that is selected from a plurality of segments within an input buffer. The pre -allocated segment is associated with an output buffer. The method also comprising moving the message to the output buffer associated with the pre-allocated segment. The pre-allocated segment is selected based on the destination of the message. The message may further comprise a priority, wherein the message is routed to a switch plane based on t he message control signals.

Another aspect of the present invention is an apparatus comprising an input buffer with a plurality of pre -allocated segments and a plurality of output buffers. Each of the plurality of pre-allocated segments of the input buffer is matched to one of the plurality of output buffers. An arbitration state machine may be coupled to the input buffer and the plurality of output buffers to prevent more than one input buffer from simultaneously accessing the same output buffer. A first state machine may be coupled to the input buffer for routing a message to one of the pre-allocated segments of the input buffer. A second state machine may also be used for moving the message from the input buffer to the output buffer. An arbitrat ion state machine may be communicatively coupled to the second state machine to prevent more than one input port from simultaneously accessing the same output port. The apparatus may further comprise an input port interface, the input port interface compr ising a ready_h signal, a write_h signal, a ready_l signal, a write_l signal and a data bus. An output interface comprising a ready_h signal, a read_h signal, a ready_l signal, a read_l signal and a data bus may also be provided. The output buffer may b configurable and can be adjusted to act as a jitter buffer to control latency.

It is further contemplated that the apparatus of the present invention may be comprised of a plurality of switch planes. Each switch plane having input and output buffers, wherein the input buffers have pre -allocated segments matched to an output buffer and state machines for routing a message from an input port to a pre -allocated segment of the input buffer, for routing a message from the input buffer to the output buffer, and for controlling the message flow between the input and output buffers such that only one input buffer is accessing an output buffer at any point in time. Each switch plane is assigned a priority so that higher priority messages are processed by high priority plane while low priority messages are processed by low priority plane. Another aspect of the present invention is a method for predicting the amount of time available to move a message into an input port wherein messages are removed from the input port by using a round robin scheme to determine the number of input buffers that are pending to be polled by an arbitrator and multiplying the number of input buffers the arbitrator must poll by the clock rate.

The methods of the present invention may be embodied in hardware, software, or a combination thereof.

Among those benefits and improvements that have been disclosed, other objects and advantages of this invention will become apparent from the following description taken in conjunction with the a ccompanying drawings. The drawings constitute a part of this specification and include exemplary embodiments of the present invention and illustrate various objects and features thereof.

The drawings illustrate the best mode presently contemplated of ca rrying out the invention.

In the drawings:
FIG 1 is a block diagram illustrating the format of a Task Message as contemplated by the preferred embodiment of the present invention;
FIG 2 is a block diagram of a task manager and connections between the task manager and task blocks;
FIG 3 is a block diagram of a switch plane;
FIG 4 is an internal block diagram of a task manager;
FIG 5 is a detailed block diagram of an input port and output port of a Task manager; and
FIG 6 is a block diagram illustrating the steps used by the task manager to forward a message.

Throughout this description, the preferred embodiment and examples shown should be considered as exemplars, rather than limitations, of the present invention.

The present invention is directed to a pr ocess to forward proprietary messages among task blocks via a task manager's input ports and output ports. The main function of the task manager is to route task messages and act as a centralized center to receive and distribute messages from/to task bloc ks. A Task message contains control information and parameters for the task. Each task block performs a pre -defined function with the control information. After the task is processed, the task block may modify the task message and send it to the task manager. The task manager then distributing the task to the next task block. The task manager continuously processes the task.

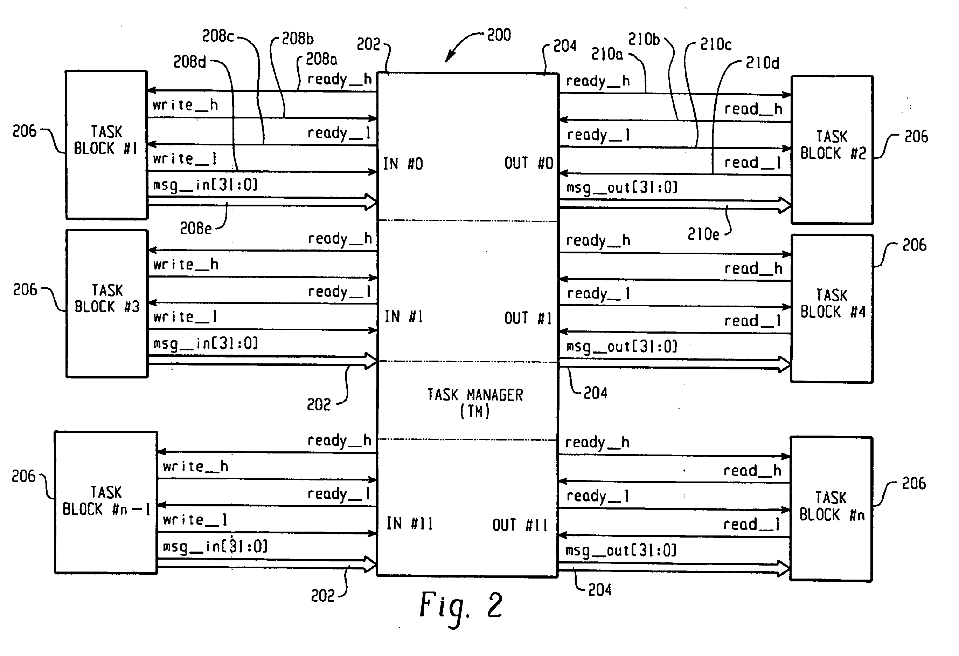

Referring to FIG 2 there is shown a block diagram of the task manager 200. The task manager 200 is comprised of input ports 202 and output ports 204. Attached to each input port 202 and output port 204 is a task block 206. Each task block 206 performs at least one pre-defined function. The task manager receives and routes the tasks (not shown) from the various task blocks 206 via the input ports 202 and output ports 204. For each task block 206 connected to an input port 202, the connections comprise a ready_h line 208a, a write_h line 208b, a ready_l line 208c, a write_l line 208d and a data bus 208e. For each task block 206 connected to an output port 204, the connections comprise a ready_h line 210a, a read_h line 210b, a ready_l line 210c, a read_l line 201 d and a data bus 210e..

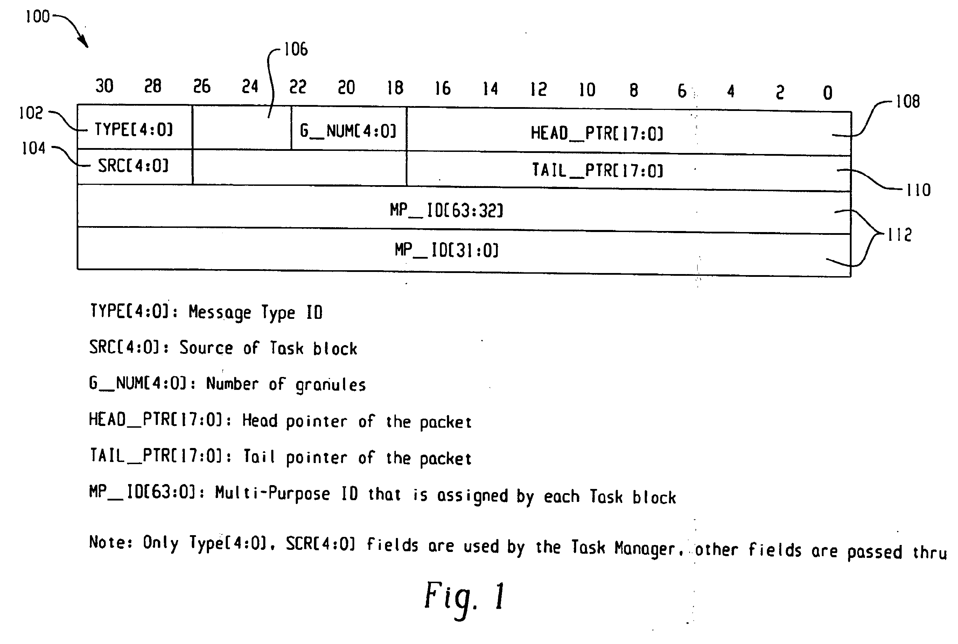

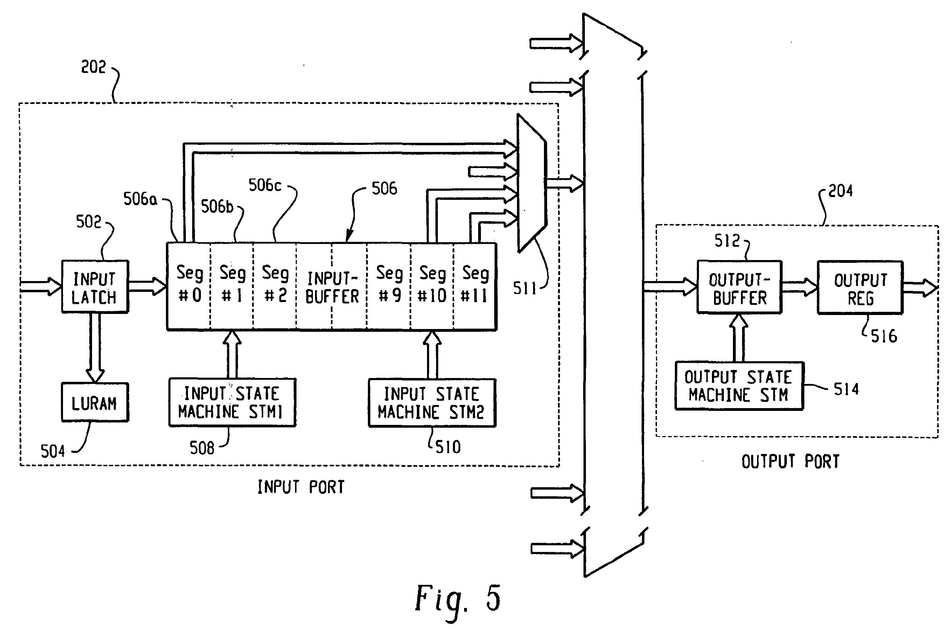

Referring now to FIG 1 with continued reference to FIG 2, there is shown the format of a task message 100. The task message 100 comprises the following fields, TYPE 102, SRC 104, G_NUM 106, HEAD_PTR 108, TAIL_PTR 110, and MP_ID 112. The TYPE 102 field is the type of message. The TYPE 102 field defines the type of task wherein each task has a predefined path flow which specifies the order of the task blocks. The task manager 200 uses this information to route the task message 100. The SRC 104 field is the source task block 206 (Fig. 2). This SRC 104 field is used to specify the source inpu t port 202 of the task message 100. The TYPE 102 field is used by the task manager 200 to store the message into a corresponding input buffer 506 (FIG. 5) to prevent head -of-line blocking. The G_NUM 106 field specifies the number of granules of the corre sponding packet (not shown). The HEAD_PTR 108 and TAIL_PTR 110 fields are the Head and Tail Pointer of the corresponding packet (not shown). The MP_ID 112 field is a multipurpose ID field used to track the flow of the corresponding packet (not shown). It should be noted that Message and Packet as defined herein are different. A Message as defined herein means an identification of the packet. Because it is not practical to transport the packet among the task blocks, each packet is assigned an identification that is called Message and message is used as a way to pass the packet information among the Task blocks.

It should be noted that only the TYPE 102 field is used in the task manager 200 for messages forwarding. The task manager 200 does not use any of the other fields. The task manger uses the message TYPE 102 field and its internal look -up table, LURAM 504 (FIG 5), to route the message to the task blocks 206.

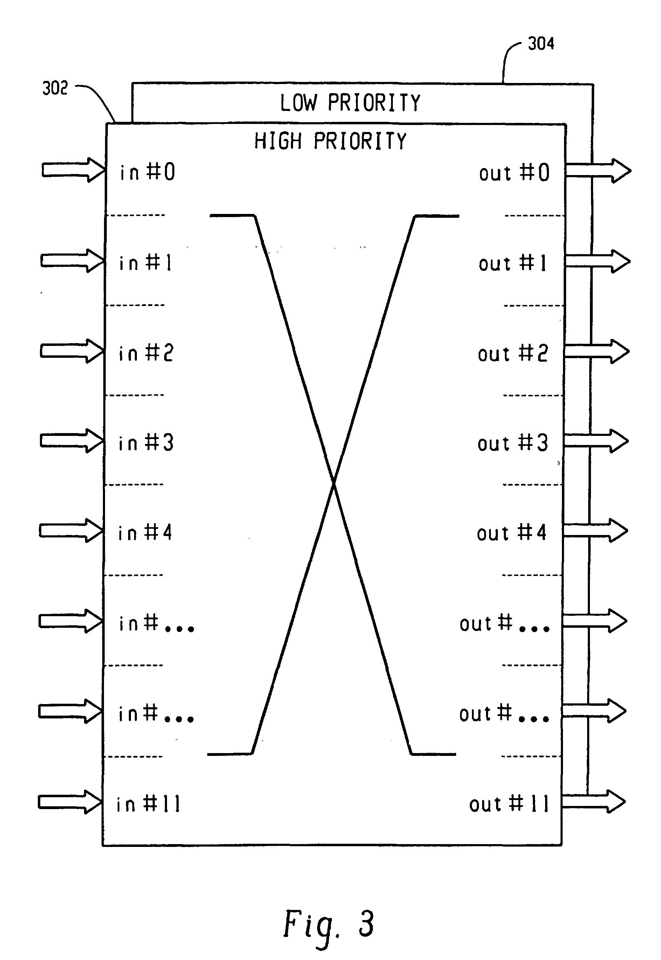

The task manager 200 has two separate switch planes 302, 304 as shown in FIG 3. The two switch planes 302 and 304 perform the identical functions. One of the switch planes 302 is used for high priority traffic, and the other 304 is used for low priority traffic. Switch plane 302 comprises its own ready_h line 208a, a write_h line 208b, a ready_h line 210a, and a read_h line 210b. The other switch plane 304 comprises its own a ready_l line 208c, a write_l line 208d, a ready_l line 210c, and a read_l line 210d. Only the data bus 208e and 210e are shared between switch planes 302 and 304

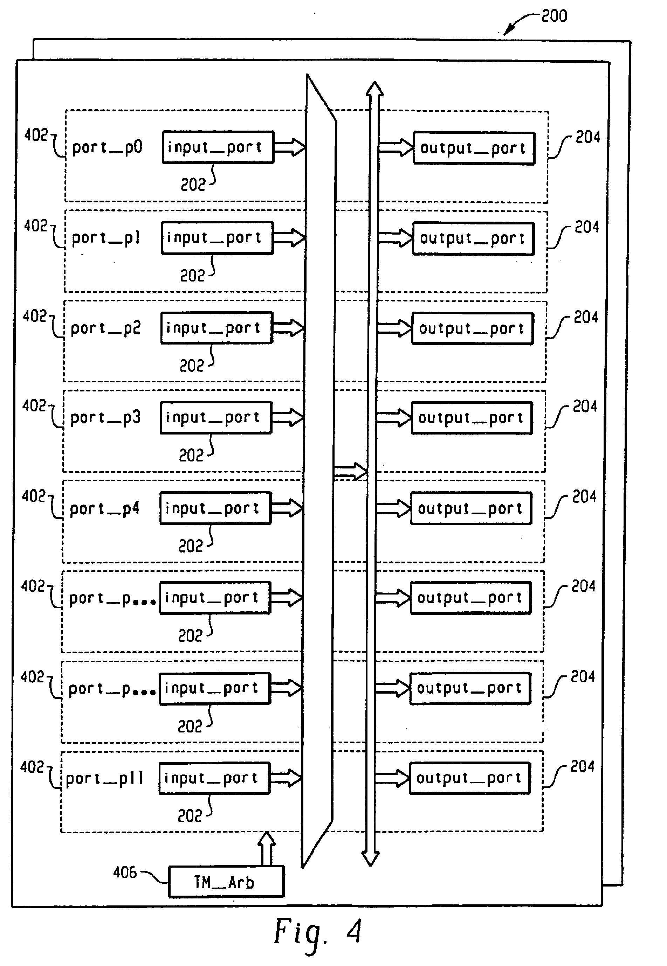

Referring now to FIG 4 with continued reference to FIG 1, FIG 2 and FIG 3, there is illustrated an internal block diagram of the task manager 200. The task manager 200 is comprised of a plurality of ports 402. Each port 402 has an input port 202 and an o utput port 204. Forwarding of messages from an input port 202 to an output port 204 is coordinated by an arbitration state machine 406. One function of the arbitration state machine 406 is to prevent more than one input port 202 from forwarding messages to the same output port 204. Typically, the arbitration state machine 406 uses a round -robin scheme wherein every input port 202 has equal access. This functionality may be implemented via a multiplexer or other standard switching equipment well known i n the art.

Referring now to FIG 5 there is illustrated a more detailed description of the task manger's 200 input port 202 and output port 204. Each input port 202 comprises input buffers 506, an input latch 502, a lookup RAM (LURAM) 504, and two input state machine (STM1) 508 and (STM2) 510.

The input buffer 506 is a RAM based buffer and is configurable and divided into pre - allocated segments 506a, 506b, 506c. The segment is used to store messages before forwarding to the output port's 204 output bu ffer 512. By using a RAM based input buffer 506, the Host/CPU can dynamically allocate and configure each individual segment with a different amount of space to accommodate the traffic burst behavior of each input port 202. Each of the input buffer's 202 pre-allocated segments 506a, 506b, and 506c is a dedicated space to hold messages for an assigned output port 204. For example segment 1 506a is a space to hold messages for output port 1 (not shown), segment #2 506b is a space to hold messages for output port #2 (not shown). By providing multiple segments to store message within the input buffer 202, It can prevent head -of-line blocking. For example, when an input port's 202 traffic is bursty or the destination output port 204 is busy, this can cause t he port's output buffer 512 to fill up. If there are more messages arriving and the messages are destined to other non-busy ports, then these messages can be processed by the task manager 200 because they can be stored in the other segments. Otherwise, w hen the output buffer 512 is full, the output buffer 512 will stop accepting messages from the input port 202 and eventually the input port 202 will send back pressure to the source task block 206.

When a task block's 206 message 100 is sent to the tas k manger's 200 input port 202, the message 100 is latched by the input latch 502 and the message TYPE field 102 is extracted and used as an index to the internal LURAM 504. The LURAM 504 table determines the message's 100 destination. The message 100 is then presorted and tagged with the destination and forwarded directly into the pre -allocated segment, e.g. 506a, within the input buffer 506 corresponding to the output port 204 of the message's 100 destination.

The two input state machines, (STM1) 508 a nd (STM2) 510, coordinate traffic flow for the input buffer 506. STM1 508 handles the message flow at the input port 202 into the input buffer 506 while STM2 510 is responsible for moving the message out of the input buffer 506 and into the output port 2 04.

Since, in the preferred embodiment, the input buffer 506 is a RAM both STM1 508 and STM2 510 will have to coordinate with each other when sharing access to the input buffer 506 to avoid data contention. To move a message into the output buffer 51 2, the input port's 202 STM2 510 has to request access to the output port 204. The access request is handled by the arbitration state machine 406, which grants equal access to all ports by using a round robin access scheme. Multiplexer 511 selects the a ppropriate pre-allocated segment for the output buffer 512 currently selected by the arbitration state machine 406. While one input port 202 is granted access to an output port 204, the remaining request input port's will have to wait for access.

Another aspect of the present invention is the ability to optimize the message rate from a source block (206) (FIG 1) to an input port 202). Logic is implemented to predict how much time is available for STM1 508 to move a task block's 206 message to the inp ut buffer 506 before STM2 510 will obtain access to the input buffer 506. Because the arbitration state machine 406 uses a round -robin scheme wherein every input port 202 is given equal access, the time available for STM1 508 to move a task block's messag e to the input buffer 506 can be predicted by sampling all of the other input port's 202 and determining how many input ports 202 have messages to be moved to an output port 204. For example, using a 133Mhz clock speed, and because the task manager 100 o n average takes five system clock cycles to process a message. The predicted time can be computed by 5 clocks x 7.5 nS x # request pending ports. The predict time allows the STM1 508 continuous to move message 100 into the input buffer 506. Similarly, th e capacity throughput of the task manager 200 can be computed by substituting the total number of ports for the task manager 200 for # ports, which for 12 ports yields 1 / (5 x 7.5nS x 12) = 2.22 M messages/second.

Each output port 204 has its own output buffer 512 which serves as a buffer to store messages before sending the messages to an output register 516 and to its destination task block 206 (FIG 2). Preferably, the size of the output buffer 512 is configurable and can be act as a jitter buffer to control latency. An output state machine 514 routes the message from the output buffer 512 to its destination. When the output buffer 512 is full, it communicates to the input buffer 506 to indicate there is no space available and that no more messages will be accepted. Of course when the output buffer 512 again has space, it will communicate to the input buffer 506 to resume accepting messages.

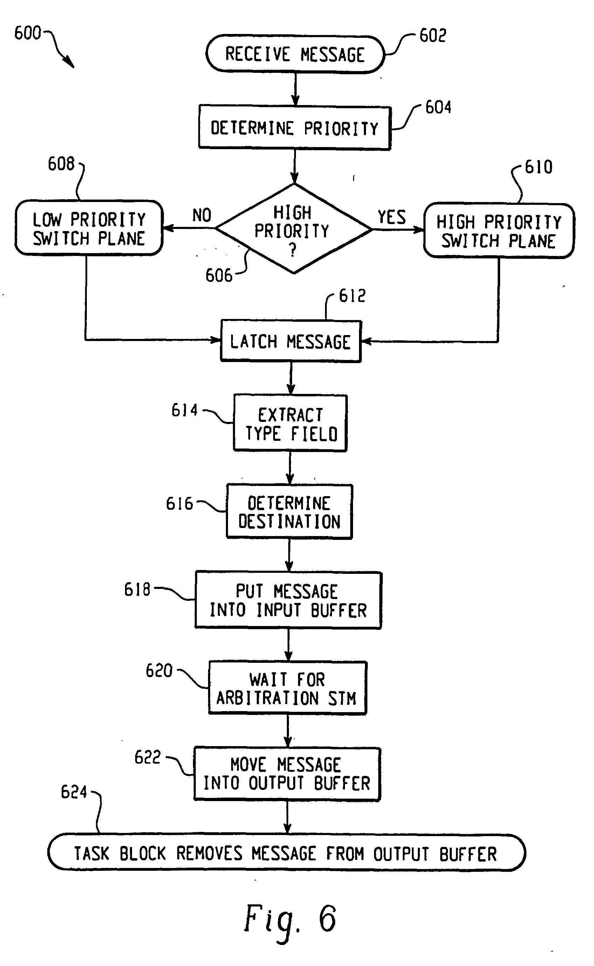

Referring now to FIG 6, there is shown a step -by-step process 600 used by the present invention for process ing tasks. The process 600 begins at step 602 when a message 100 is sent by a task block 206 to an input port 202. At step 604 the message's 100 priority is determined by its control signals. At step 606 the message 100 is routed according to its priori ty, if the message 100 is a high priority it is routed to the high priority switch plane 302, otherwise it is routed to the low priority switch plane 304. Because the switch planes 302, 304 perform the identical functions, the remaining steps are the same for either switch plane.

Once a switch plane 302, 304 receives the message 100, it is latched as shown in step 612. At step 614 the data in the TYPE 102 field of the message 100 is extracted. At step 616, the LURAM 504 (FIG 5) is used to determine t he destination of the message 100. The message is then forwarded by STM1 508 into the appropriate pre -allocated segment appropriate for the destination, e.g. either 506a, 506b, 506c, etc. of the input buffer 506, as shown in step 618. As shown in step 6 20 the message 100 waits in the input buffer 506 until the arbitration state machine 406 polls the input buffer 506. At step 622, the message 100 is moved by input state machine 510 via multiplexer 511 into the output buffer 512. A task block 206 at the destination then removes the message 100 from the output buffer at step 624.

Although the invention has been shown and described with respect to a certain preferred embodiment, it is obvious that equivalent alterations and modifications will occur to others skilled in the art upon the reading and understanding of this specification. The present invention includes all such equivalent alterations and modifications and is limited only by the scope of the following claims.

## Claims

1. A method of forwarding messages among task blocks using a task manager, the method comprising:
receiving a message at an input port of the task manager;
determining a destination of the message;
storing the message in a pre -allocated segment that is selected from a plurality of segments within an input buffer, the pre -allocated segment associated with an output buffer; and
moving the message to the output buffer;
wherein the pre-allocated segment is selected based on the destination of the message.

2. The method of claim 1, further comprising extracting a TYPE field from the message.

3. The method of claim 1 or 2, further comprising removing the message from the output buffer by a task block.

4. The method of claim 1, 2 or 3, wherein the task manager further comprises a first state machine for handling the message at the input port and routing the message to the pre-allocated segment.

5. The method of claim 4, wherein the task manager further comprises a second state machine for moving the message from the input buff er to the output buffer.

6. The method of any preceding claim, further comprising adjusting the size of the output buffer.

7. A method of forwarding messages among task blocks using a task manager having at least two switch planes , the steps comprisin g:
receiving a message at an input port of the task manager,
determining a priority of the message base on the control signals;
routing the message to a one of the at least two switch planes based on the priority of the message;
latching the messag e;
extracting the TYPE field;
determining a destination of the message;
storing the message in a pre -allocated segment that is selected from a plurality of segments within an input buffer, the pre -allocated segment associated with an output buffer; and
moving the message to one of the plurality of output buffers of the selected switch plane;
wherein the pre-allocated segment is selected based on the destination of the message.

8. The method of claim 7, further comprising removing the message from the output buffer by a task block.

9. The method of claim 7 or 8, wherein the task manager further comprises a first state machine for handling the message at the input port and routing the message to the pre - allocated segment of the input buffer.

10. The method of claim 9, wherein the task manager further comprises a second state machine for moving the message from the input buffer to the output buffer.

11. The method of any one of claims 7 to 10, further comprising adjusting the output buffer.

12. An apparatus comprising:
an input buffer with a plurality of pre -allocated segments; and
a plurality of output buffers
wherein each of the plurality of pre -allocated segments of the input buffer is matched to one of the plurality of output buffers.

13. The apparatus of claim 12, further comprising an arbitration state machine coupled to the input buffer and the plurality of output buffers to prevent more than one input buffer from simultaneously accessing the same output buffer.

14. The apparatus o f claim 13, further comprising a first state machine coupled to the input buffer for routing a message to one of the plurality of pre -allocated segments of the input buffer.

15. The apparatus of claim 14, further comprising a second state machine coupled to the input buffer and the plurality of output buffers for moving a message from the input buffer to the output buffer.

16. The apparatus of claim 15, further comprising an arbitration state machine communicatively coupled to the second state machine t o prevent more than one input buffer from simultaneously accessing the same output buffer.

17. The apparatus of any one of claims 12 to 16, further comprising an input port interface, the input port interface comprising a ready_h signal, a write_h signa 1, a ready_1 signal, a write_1 signal and a data bus.

18. The apparatus of any one of claims 12 to 17, further comprising an output port interface, the output port interface comprising a ready_h signal, a read_h signal, a ready_l signal, a read_l signal and a data bus

19. The apparatus of any one of claims 12 to 18, wherein the output buffer is configurable and can be adjusted to act as a jitter buffer to control latency.

20. A task manager comprising:
a first switch plane;
a second switch plane, wherein each switch plane is independently operated
the first switch plane and the second switch plane each comprising:
an input buffer with a plurality of pre -allocated segments; and
a plurality of output buffers
wherein each of the plurality of pre-allocated segments of the input buffer is matched to a one of the plurality of output buffers.

21. The task manager of claim 20, the first switch plane and the second switch plane each further comprising an arbitration state machine coupled to the inpu t buffer and the plurality of output buffers to prevent more than one input buffer from simultaneously accessing the same output buffer.

22. The task manager of claim 20 or 21, the first switch plane and the second switch plane each further comprising a first state machine coupled to the input buffer for routing a message to the one of the plurality of pre -allocated segments of the input buffer.

23. The task manager of claim 20, 21 or 22, the first switch plane and the second switch plane each further c omprising a second state machine coupled to the input buffer and the plurality of output buffers for moving a message from the input buffer to the output buffer.

24. The task manager of claim 23, the first switch plane and the second switch plane each further comprising an arbitration state machine communicatively coupled to the second state machine to prevent more than one input port from simultaneously accessing the same output port.

25. The task manager of any one of claims 20 to 24, further comprisi ng an input port interface, the input port interface comprising a ready_h signal, a write_h signal, a ready_l signal, a write_l signal and a data bus

26. The task manager of any one of claims 20 to 25, further comprising an output port interface, the output port interface comprising a ready_h signal, a read_h signal, a ready_l signal, a read_l signal and a data bus

27. The task manager of any one of claims 20 to 26, wherein the output buffer is configurable and can be adjusted to act as a jitter buffer to control latency.

28. A task manager comprising:
a first switch plane;
a second switch plane, wherein each switch plane is independently operated
the first switch plane and the second switch plane each comprising:
an input buffer with a plurali ty of pre-allocated segments; and
a plurality of output buffers
means for associating each of the plurality of pre -allocated segments of the input buffer to one of the plurality of output buffers.

29. The task manager of claim 28, the first switch plan e and the second switch plane each further comprising arbitration means coupled to the input buffer and the plurality of output buffers to prevent more than one input buffer from simultaneously accessing the same output buffer.

30. The task manager of claim 28 or 29, the first switch plane and the second switch plane each further comprising a first routing means coupled to the input buffer for routing a message to one of the plurality of pre -allocated segments of the input buffer.

31. The task manager o f claim 28, 29 or 30, the first switch plane and the second switch plane each further comprising a second routing means coupled to the input buffer and the plurality of output buffers for moving a message from the input buffer to the output buffer.

32. The task manager of claim 31, the first switch plane and the second switch plane each further comprising an arbitration means communicatively coupled to the second routing means to prevent more than one input port from simultaneously accessing the same outp ut port.

33. The task manager of any one of claims 28 to 32, further comprising adjustment means wherein the output buffer is adjusted to act as a jitter buffer to control latency.

34. The task manager of claim 33, wherein the adjust means determines ho w many outstanding messages are waiting in the output buffer before forwarding to the Task block

35. A method for predicting the amount of time available to move a message into an input port, wherein messages are removed from the input port by using a round robin scheme, the steps comprising:
determining the number of input buffers an arbitrator must poll before polling the input buffer; and
multiplying the number of input buffers the arbitrator must poll by the clock rate.
